(19) Europäisches Patentamt
European Patent Office
Office européen des brevets

(11) Publication number: 0 352 486 A2

# (12) EUROPEAN PATENT APPLICATION

(21) Application number: 89111583.4

(22) Date of filing: 26.06.89

(51) Int. Cl.4: C08L 71/12 , C08L 67/00 , C08L 53/00

(30) Priority: 25.07.88 US 223834

(43) Date of publication of application: 31.01.90 Bulletin 90/05

(84) Designated Contracting States: DE ES FR GB IT NL

(71) Applicant: GENERAL ELECTRIC COMPANY
1 River Road
Schenectady New York 12305(US)

(72) Inventor: Brown, Sterling Bruce
3 Rosa Road
Schenectady New York 12308(US)

(74) Representative: Catherine, Alain
General Electric France Service de Propriété Industrielle 18 Rue Horace Vernet
F-92136 Issy-Les-Moulineaux Cedex(FR)

## (54) Solventresistant, compatible blends of polyphenylene ethers and polyesters.

(57) Solvent-resistant resin blends with a wide variety of desirable impact and tensile properties are prepared from a polyphenylene ether having a low proportion of unneutralized amino nitrogen or a blend thereof with a polystyrene; an elastomeric polyester or a mixture thereof with a poly-(ethylene terephthalate) or poly(butylene terephthalate); and at least one elastomeric polyphenylene ether-compatible impact modifier. There may also be present a minor amount of at least one polyepoxide such as triglycidyl isocyanurate.

EP 0 352 486 A2

Xerox Copy Centre

# SOLVENT-RESISTANT, COMPATIBLE BLENDS OF POLYPHENYLENE ETHERS AND POLYESTERS

This invention relates to novel resinous compositions with potentially high impact strength, resistance to solvents and thermal distortion, high tensile strength and thermal stability. More particularly, it relates to improved compositions comprising polyphenylene ethers and polyesters.

The polyphenylene ethers are a widely used class of thermoplastic engineering resins characterized by excellent hydrolytic stability, dimensional stability, toughness, heat resistance and dielectric properties. They are also resistant to high temperature conditions under many circumstances. Because of the brittleness of many compositions containing polyphenylene ethers, they are frequently blended with impact modifiers such as elastomers to form molding compositions.

Two disadvantages of the polyphenylene ethers which militate against their use for molding such items as automotive parts are their low resistance to non-polar solvents such as gasoline and relatively poor tensile properties. For increased solvent resistance and/or improved tensile properties, it would be desirable to blend the polyphenylene ethers with resins which are highly resistant to solvents and/or which have high tensile strengths. Illustrative of the former are the thermoplastic polyethers including poly(alkylene dicarboxylates), especially the poly(alkylene terephthalates); the latter include various types of elastomeric polymers.

However, blends of polyphenylene ether with such polyesters frequently undergo phase separation and delamination. They typically contain large, incompletely dispersed polyphenylene ether particles and no phase interaction between the two resin phases. Molded parts made from such blends are typically characterized by undesirably low impact and tensile strength.

Copending, commonly owned application Serial No. [RD-17320] discloses blends of polyphenylene ethers, elastomeric polyesters or blends thereof with poly(alkylene dicarboxylates) and impact modifiers, compatibilized with polycarbonates. The present invention is based on the discovery that by employment of a specific class of elastomeric polyesters, the need for polycarbonates is eliminated.

Thus, the present invention provides polymer blends having a high degree of tensile strength and/or resistance to solvents. It also provides highly compatible polymer blends containing polyphenylene ethers and polyesters, and resinous molding compositions prepared therefrom.

In one of its aspects, therefore, the invention is directed to resinous compositions free from polycarbonates and comprising the following resinous components and any reaction products thereof, all percentage proportions being by weight of total resinous components:

(A) about 30-55% of at least one polyphenylene ether containing at most 800 ppm. of unneutralized amino nitrogen, or a blend thereof with at least one polystyrene;

(B) about 30-55% of (B-1) at least one polyester consisting essentially of structural units of the formulas

(I) $-O-R^1-O-\overset{O}{\overset{\|}{C}}-A^1-\overset{O}{\overset{\|}{C}}-$ and

(II) $$-O\left(R^2-O\right)_x\overset{O}{\overset{\|}{C}}-A^1-\overset{O}{\overset{\|}{C}}-$$ ,

wherein $R^1$ is a saturated $C_{2-10}$ divalent aliphatic or alicyclic hydrocarbon radical and $A^1$ is a divalent aromatic radical containing about 6-20 carbon atoms, $R^2$ is a saturated $C_{2-4}$ divalent aliphatic hydrocarbon radical and x has an average value of at least about 10; or a mixture thereof with (B-2) at least one polyester consisting essentially of units of formula I; and

(C) about 8-20% of at least one elastomeric polyphenylene ether-compatible impact modifier.

It is not certain whether any or all of the components in these compositions interact chemically upon blending. Therefore, the invention includes compositions comprising said components and any reaction products thereof, as well as other optional components described hereinafter.

The polyphenylene ethers (also known as polyphenylene oxides) used as all or part of component A in the present invention comprise a plurality of structural units having the formula

(III) 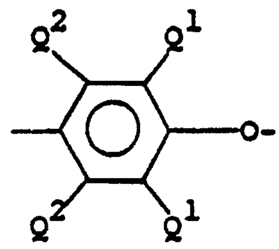 .

In each of said units independently, each $Q^1$ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen an oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen. Suitable polyphenylene ethers are disclosed in a large number of patents.

Both homopolymer and copolymer polyphenylene ethers are included. Suitable homopolymers are those containing, for example, 2,6-dimethyl-1,4-phenylene ether units. Suitable copolymers include random copolymers containing such units in combination with (for example) 2,3,6-trimethyl-1,4-phenylene ether units. Many suitable random copolymers, as well as homopolymers, are disclosed in the patent literature.

Also included are polyphenylene ethers containing moieties which modify properties such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

The polyphenylene ether generally has a number average molecular weight within the range of about 3,000-40,000 and a weight average molecular weight within the range of about 20,000-80,000, as determined by gel permeation chromatography. Its intrinsic viscosity is most often in the range of about 0.15-0.6 and preferably at least 0.25 dl./g., as measured in chloroform at 25°C.

The polyphenylene ethers are typically prepared by the oxidative coupling of at least one corresponding monohydroxyaromatic compound. Particularly useful and readily available monohydroxyaromatic compounds are 2,6-xylenol (wherein each $Q^1$ is methyl and each $Q^2$ is hydrogen), whereupon the polymer may be characterized as a poly(2,6-dimethyl-1,4-phenylene ether), and 2,3,6-trimethylphenol (wherein each $Q^1$ and one $Q^2$ is methyl and the other $Q^2$ is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S. Patents 3,306,874, 3,306,875, 3,914,266 and 4,028,341. They are usually combinations of cuprous or cupric ions, halide (i.e., chloride, bromide or iodide) ions and at least one amine.

Catalyst systems containing manganese compounds constitute a second preferred class. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also useful are known cobalt-containing catalyst systems. Suitable manganese and cobalt-containing catalyst systems for polyphenylene ether preparation are known in the art by reason of disclosure in numerous patents and publications.

The polyphenylene ethers which may be used in the invention include those which comprise molecules

having at least one of the end groups of the formulas

(IV) 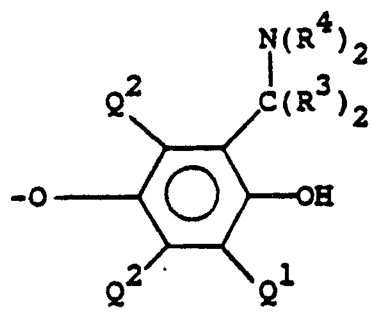 and

(V) 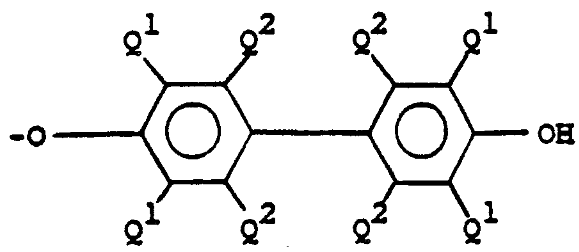 ,

wherein $Q^1$ and $Q^2$ are as previously defined; each $R^3$ is independently hydrogen or alkyl, with the proviso that the total number of carbon atoms in both $R^3$ radicals is 6 or less; and each $R^4$ is independently hydrogen or a $C_{1-6}$ primary alkyl radical. Preferably, each $R^3$ is hydrogen and each $R^4$ is alkyl, especially methyl or n-butyl.

Polymers containing the end groups of formula IV (hereinafter "aminoalkyl end groups") may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the α-hydrogen atoms on one or more $Q^1$ radicals. The principal site of reaction is the $Q^1$ radical adjacent to the hydroxy group on the terminal unit of the polymer chain. During further processing and/or blending, the aminoalkyl end groups may undergo various reactions, probably involving a quinone methide-type intermediate of the formula

(VI) 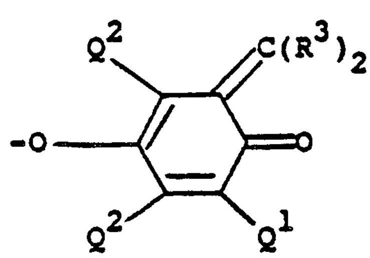 ,

with numerous beneficial effects often including an increase in impact strength and compatibilization with other blend components. Reference is made to U.S. Patents 4,054,553, 4,092,294, 4,477,696, 4,477,651 and 4,517,341, the disclosures of which are incorporated by reference herein.

Polymers with 4-hydroxybiphenyl end groups of formula V are typically obtained from reaction mixtures in which a by-product diphenoquinone of the formula

(VII) 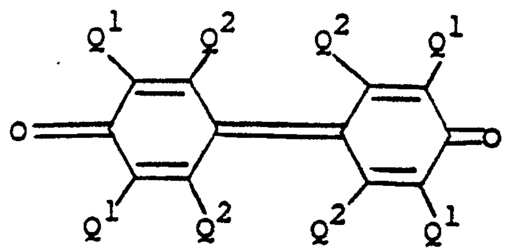

is present, especially in a copper-halide-secondary or tertiary amine system. In this regard, the disclosure of U.S. Patent 4,477,649 is again pertinent as are those of U.S. 4,234,706 and 4,482,697, which are also incorporated by reference herein. In mixtures of this type, the diphenoquinone is ultimately incorporated into the polymer in substantial proportions, largely as an end group.

In many polyphenylene ethers obtained under the above-described conditions, a substantial proportion of the polymer molecules, typically constituting as much as about 90% by weight of the polymer, contain end groups having one or frequently both of formulas IV and V. In particular, polyphenylene ethers originally containing at least about 60% by weight of molecules having aminoalkyl end groups of formula IV are contemplated for use in the present invention.

The use of polyphenylene ethers containing substantial amounts of unneutralized amino nitrogen generally affords compositions with undesirably low impact strengths. The possible reasons for this are explained hereinafter. The amino compounds include, in addition to the aforementioned aminoalkyl end groups, traces of amine (particularly secondary amine) in the catalyst used to form the polyphenylene ether.

According to the present invention, therefore, a substantial proportion of any amino compounds in the polyphenylene ether is removed or inactivated. Polymers so treated are sometimes referred to hereinafter as "inactivated polyphenylene ethers". They contain unneutralized amino nitrogen, if any, in amounts no greater than 800 ppm. and more preferably in the range of about 100-800 ppm. Various means for inactivation have been developed and any one or more thereof may be used.

One such method is to precompound the polyphenylene ether with at least one non-volatile compound containing a carboxylic acid, acid anhydride or ester group, which is capable of neutralizing the amine compounds. This method is of particular interest in the preparation of compositions of this invention having high resistance to heat distortion. Illustrative acids, anhydrides and esters are citric acid, malic acid, agaricic acid, succinic acid, succinic anhydride, maleic acid, maleic anhydride, diethyl maleate, citraconic acid, citraconic anhydride, itaconic acid, itaconic anhydride, fumaric acid, methyl fumarate and pyromellitic dianhydride. Because of their relatively high reactivity with amino compounds, the free carboxylic acids and their anhydrides, especially fumaric acid and pyromellitic dianhydride, are generally most useful. Polyphenylene ether-pyromellitic dianhydride compositions are disclosed and claimed in copending, commonly owned application Serial No. [RD-17482].

Reaction of the polyphenylene ether with the acid or anhydride may be achieved by heating at a temperature within the range of about 230-390 °C, in solution or preferably in the melt. In general, about 0.3-2.0 and preferably about 0.5-1.5 parts (by weight) of acid or anhydride is employed per 100 parts of polyphenylene ether. Said reaction may conveniently be carried out in an extruder or similar equipment. It is sometimes advantageous to incorporate the impact modifier (component C) in the composition at this stage.

Another method of inactivation is by extrusion of the polyphenylene ether under the above-described conditions with vacuum venting. This may be achieved either in a preliminary extrusion step (which is sometimes preferred) or during extrusion of the composition of this invention, by connecting the vent of the extruder to a vacuum pump capable of creating a pressure of about 200 torr or less.

It is believed that these inactivation methods aid in the removal by evaporation or the neutralization of any traces of free amines (predominantly secondary amines) in the polymer, including amines generated by conversion of aminoalkyl end groups to quinone methides of the type represented by formula VI. Polyphenylene ethers having a free amine nitrogen content below about 600 ppm. have been found particularly useful in this invention. However, the invention is not dependent on any theory of inactivation.

Component A may also contain at least one polystyrene. The term "polystyrene" as used herein includes polymers prepared by methods known in the art including bulk, suspension and emulsion polymerization, which contain at least 25% by weight of structural units derived from a monomer of the formula

(VIII) 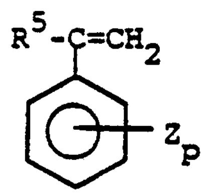

wherein $R^5$ is hydrogen, lower alkyl or halogen; Z is vinyl, halogen or lower alkyl; and p is from 0 to 5. These resins include homopolymers of styrene, chlorostyrene and vinyltoluene, random copolymers of styrene with one or more monomers illustrated by acrylonitrile, butadiene, α-methylstyrene, ethylvinylbenzene, divinylbenzene and maleic anhydride, and rubber-modified polystyrenes comprising blends and grafts, wherein the rubber is a polybutadiene or a rubbery copolymer of about 98-70% styrene and about 2-30% diene monomer. These rubber-modified polystyrenes include high impact polystyrene, or HIPS.

The proportion of polystyrene in component A is not critical, since polyphenylene ethers and polystyrenes are miscible in all proportions. Component A will generally contain about 5-50% (by weight) polystyrene, if any.

Component B comprises (B-1) at least one polyester consisting essentially of structural units of formulas I and II. In one embodiment of the invention, component B consists essentially of said polyester. The $R^1$ value therein is a $C_{2-10}$ saturated divalent aliphatic or alicyclic hydrocarbon radical, usually ethylene or tetramethylene, and $A^1$ is a divalent aromatic radical containing about 6-20 carbon atoms, usually phenylene and preferably m-phenylene, p-phenylene or a mixture thereof. The $R^2$ values are similar to $R^1$ and are usually tetramethylene.

Polyesters are used as component B-1 are ordinarily prepared by the reaction of a mixture of at least one diol such as ethylene glycol, 1,4-butanediol or 1,4-cyclohexanedimethanol and at least one polyalkylene glycol such as poly(tetramethylene ether) glycol with at least one aromatic dicarboxylic acid such as isophthalic or terephthalic acid, or lower alkyl ester thereof. The average value of x in the polyalkylene ether glycol is in the range of about 5-70, and the units incorporating it usually comprise about 5-85% by weight of the polyester.

It is also within the scope of the invention to employ as component B a mixture of component B-1 with component B-2. Component B-1 preferably comprises about 40-90% by weight of component B, with the balance being component B-2. The units of formula II generally comprise at least about 20% by weight of total component B. By this method, a spectrum of products with varying impact and tensile properties may be obtained.

In component B-2, $R^1$ may be any of the radicals described hereinabove with reference to component B-1. Poly(ethylene terephthalate) and poly(butylene terephthalate), and especially the latter, are preferred as component B-2. They are known in the art as illustrated by the following patents:

| | |
|---|---|
| 2,465,319 | 3,047,539 |
| 2,720,502 | 3,671,487 |
| 2,727,881 | 3,953,394 |
| 2,822,348 | 4,128,526. |

The polyesters used as component B-2 generally have number average molecular weights in the range of about 20,000-70,000, as determined by intrinsic viscosity (IV) at 30 °C in a mixture of 60% (by weight) phenol and 40% 1,1,2,2-tetrachloroethane. When resistance to heat distortion is an important factor the polyester molecular weight should be relatively high, typically above about 40,000.

Polyesters tend to undergo hydrolytic degradation at the high extrusion and molding temperatures encountered by the compositions of this invention. Therefore, it is preferred that the polyesters used as component B be substantially free of water.

Component C is at least one elastomeric polyphenylene ether-compatible impact modifier. Suitable impact modifiers include various elastomeric copolymers, of which examples are ethylene-propylene-diene polymers (EPDM's), both unfunctionalized and functionalized with (for example) sulfonate or phosphonate groups; carboxylated ethylene-propylene rubbers; block copolymers of alkenylaromatic compounds such as styrene with polymerizable olefins or dienes, including butadiene, isoprene, chloroprene, ethylene, propylene and butylene; and core-shell elastomers containing, for example, a poly(alkyl acrylate) core attached

to a polystyrene shell via an interpenetrating network. Such core-shell elastomers are more fully disclosed in U.S. Patent 4,681,915.

The preferred impact modifiers are block (typically diblock, triblock or radial teleblock) copolymers of alkenylaromatic compounds and dienes. Most often, at least one block is derived from styrene and at least one other block from at least one of butadiene and isoprene. Especially preferred are the triblock copolymers with polystyrene end blocks and diene-derived midblocks. It is frequently advantageous to remove (preferably) or decrease the aliphatic unsaturation therein by selective hydrogenation. The weight average molecular weights of the impact modifiers are typically in the range of about 50,000-300,000. Block copolymers of this type are commercially available from Shell Chemical Company under the trademark KRATON, and include KRATON D1101, G1650, G1651, G1652, G1657 and G1702.

An unexpected feature of the present invention is the discovery that blends of components A, B and C are compatible without the presence of a polycarbonate. In the polyphenylene ether-polyester compositions of PCT published application 87/850 and the aforementioned copending application Serial No. [RD-17320], the presence of polycarbonate is deemed necessary.

It is frequently found that impact strength and/or resistance to heat distortion are improved if there is also blended into the composition (D) at least one compound containing a plurality of epoxide moieties, generally in the amount of about 0.1-3.0 and preferably about 0.25-3.0 part per 100 parts of total components A, B and C. Illustrative compounds of this type are homopolymers of such compounds as glycidyl acrylate and glycidyl methacrylate, as well as copolymers thereof, preferred comonomers being lower alkyl acrylates, methyl methacrylate, acrylonitrile and styrene. Also useful are epoxy-substituted cyanurates and isocyanurates such as triglycidyl isocyanurate.

Component D may be introduced by blending with the other components in a single operation. However, its effectiveness may be maximized by preblending with component B, typically by dry mixing followed by preextrusion. Such preblending frequently increases the impact strength of the composition.

While the reason for the effectiveness of component E is not entirely understood, said component is believed to increase molecular weight, melt viscosity and degree of branching of the polyester by reaction with carboxylic acid end groups of plurality of polyester molecules.

Components A and B are each present in the amount of about 30-55% of total resinous components. It is frequently preferred that the weight ratio of component A to component B be at most about 1.8:1.

Component C, the elastomeric impact modifier, may be present in the amount of about 8-20%. Since a decrease in the proportion of component C frequently increases heat distortion temperature, the level thereof should be minimized if high resistance to heat distortion is desired.

The chemical role of the inactivated polyphenylene ether in the compositions of this invention is not fully understood, and any reliance on chemical theory as a basis for the invention is specifically disclaimed. It is believed, however, that the presence of more than a certain minimum proportion of amino compounds in the polyphenylene ether can cause degradation in the molecular weight of the polyesters. If this is true, the removal or neutralization of the greater part of such amino compounds produces an environment in which high molecular weight is maintained in the polyesters.

It is within the scope of the invention for the composition to contain other conventional ingredients such as fillers, flame retardants, pigments, dyes, stabilizers, anti-static agents, mold release agents and the like. The presence of other resinous components is also contemplated. These include impact modifiers compatible with component B, such as various graft and core-shell copolymers of such monomers as butadiene, styrene, butyl acrylate and methyl methacrylate. It is frequently preferred to preextrude such impact modifiers with component B prior to its utilization in the invention. By this method, compositions having improved ductility at low temperatures may be prepared.

Also included as other resinous components are other impact and processability modifiers for component A, such as olefin copolymers. In general, the amounts of any other resinous components, if present, will not exceed about 15% by weight of total resin.

The preparation of the compositions of this invention is normally achieved by merely blending the ingredients thereof under conditions adapted for the formation of an intimate blend. Such conditions often include extrusion, which may be conveniently effected in a screw-type or similar extruder which applies a substantial shearing force to the composition, thereby decreasing the particle size thereof. The extrusion temperature is generally in the range of about 100-325° C.

The extrusion conditions may affect the impact strength and other properties of the composition. For example, it is sometimes found that the impact strength of the composition is increased if it is extruded more than once, thereby insuring effective blending.

In another embodiment, a single extruder is employed which has at least two ports for introduction of ingredients, one such port being downstream from the other. Component A or any reactants for preparation

thereof and at least a portion of component C are introduced through the first port and extruded, preferably at a temperature in the range of about 300-350 °C. This portion of the extruder is preferably vacuum vented.

The remaining ingredients are introduced through the downstream port and extrusion is continued, preferably at a lower temperature to minimize degradation of components B and C. For further minimization of degradation, it may be advantageous to introduce a portion of component C at this point. Typical extrusion temperatures at this stage are in the range of about 250-320 °C.

The invention is illustrated by the following examples. Percentages and other proportions in the examples are by weight and are based on total resinous constituents. Impact and tensile values were determined in British units and have been converted to metric units.

Examples 1-9

A series of compositions according to the invention was prepared from the following:

Component A - a poly(2,6-dimethyl-1,4-phenylene ether) having a number average molecular weight of about 20,000 and an intrinisic viscosity in chloroform at 25 °C of 0.46 dl./g., which has been extruded on a twin screw extruder within the temperature range of about 300-315 °C, with vacuum venting to a maximum pressure of 20 torr; it contained 438 ppm. nitrogen.

Component B:

PTME(50,000) and PTME (54,000) - commercially available elastomeric polyterephthalates from mixtures of tetramethylene glycol and poly(tetramethylene ether) glycol, having the designated number average molecular weights and about 20% and 50% by weight, respectively, of poly(tetramethylene ether) glycol units.

PBT - a poly(butylene terephthalate) having a number average molecular weight of about 50,000, as determined by gel permeation chromatography.

Component C - a commercially available triblock copolymer with polystyrene end blocks having weight average molecular weights of 29,000 and a hydrogenated butadiene midblock having a weight average molecular weight of 116,000.

Component D - triglycidyl isocyanurate.

The ingredients were tumble mixed in a jar mill for 1/2 hour and extruded at 256-268 °C on a twin screw extruder with a screw speed of 400 rpm. The extrudate was quenched in water and pelletized. The pellets were then injection molded into test bars which were evaluate for notched Izod impact strength (ASTM procedure D256) and tensile properties (ASTM procedure D638). The relevant parameters and test results are given in the following table.

| | Example | | | | | | | | |
|---|---|---|---|---|---|---|---|---|---|
| | 1 | 2 | 3 | 4 | 5 | 6 | 7 | 8 | 9 |
| Component A, % | 43.5 | 43.5 | 43.5 | 34.3 | 52.5 | 43.4 | 43.4 | 43.9 | 35 |
| Component B, %: | | | | | | | | | |
| PTME(50,000) | ---- | ---- | 43.5 | ---- | ---- | ---- | ---- | ---- | --- |
| PTME(54,000) | 43.5 | 43.5 | ---- | 52.5 | 34.3 | 22.2 | 22.2 | 26.5 | 52 |
| PBT | ---- | ---- | ---- | ---- | ---- | 22.2 | 22.2 | 17.3 | --- |
| Component C, % | 13.0 | 13.0 | 13.0 | 13.1 | 13.1 | 12.1 | 12.1 | 12.1 | 13 |
| Component D, phr. | 0.32 | 0.8 | 0.5 | 0.9 | 0.9 | ---- | 0.8 | 0.9 | --- |
| Izod impact strength, joules/m. | 171 | 267 | 69 | 294 | 203 | 144 | 401 | 208 | 230 |
| Tensile strength at break, MPa. | 14.7 | 14.6 | 29.4 | 13.0 | 19.2 | ---- | 25.8 | 23.1 | --- |
| Tensile elongation, % | 54 | 56 | 48 | 150 | 49 | ---- | 48 | 46 | --- |

## Claims

1. A resinous composition free from polycarbonates and comprising the following resinous components and any reaction products thereof, all percentage proportions being by weight of total resinous components:

(A) about 30-55% of at least one polyphenylene ether containing at most 800 ppm. of unneutralized amino nitrogen, or a blend thereof with at least one polystyrene;

(B) about 30-55% of (B-1) at least one polyester consisting essentially of structural units of the formulas

(I) $-O-R^1-O-\overset{O}{\overset{\|}{C}}-A^1-\overset{O}{\overset{\|}{C}}-$ and

(II) $$-O\left(R^2-O\right)_x\overset{O}{\overset{\|}{C}}-A^1-\overset{O}{\overset{\|}{C}}-$$ ,

wherein $R^1$ is a saturated $C_{2-10}$ divalent aliphatic or alicyclic hydrocarbon radical and $A^1$ is a divalent aromatic radical containing about 6-20 carbon atoms, $R^2$ is a saturated $C_{2-4}$ divalent aliphatic hydrocarbon radical and x has an average value of at least about 10; or a mixture thereof with (B-2) at least one polyester consisting essentially of units of formula I; and

(C) about 8-20% of at least one elastomeric polyphenylene ether-compatible impact modifier.

2. A composition according to claim 1 wherein the polyphenylene ether comprises a plurality of structural units having the formula

(III) 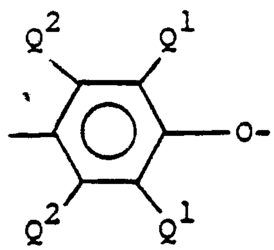 ,

and in each of said units independently, each $Q^1$ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

3. A composition according to claim 2 wherein component A is a poly(2,6-dimethyl-1,4-phenylene ether).

4. A composition according to claim 3 wherein the weight ratio of component to component B is at most about 1.8:1.

5. A composition according to claim 4 wherein component C is a block copolymer of at least one alkenylaromatic compound and at least one diene.

6. A composition according to claim 5 wherein component C is a triblock copolymer wherein the end blocks are derived from styrene and the midblock is derived from at least one of isoprene and butadiene.

7. A composition according to claim 6 wherein the aliphatic unsaturation in the midblock has been removed by selective hydrogenation.

8. A composition according to claim 5 wherein each of $R^1$ and $R^2$ is tetramethylene and $A^1$ is m- or p-phenylene or a mixture thereof.

9. A composition according to claim 8 wherein $A^1$ is p-phenylene.

10. A composition according to claim 9 wherein component B consists of component B-1.

11. A composition according to claim 10 wherein component C is a triblock copolymer wherein the end blocks are derived from styrene and the midblock is derived from at least one of isoprene and butadiene.

12. A composition according to claim 11 wherein the aliphatic unsaturation in the midblock has been removed by selective hydrogenation.

13. A composition according to claim 9 wherein component B is a mixture of a poly(butylene terephthalate) with component B-1.

14. A composition according to claim 13 wherein component C is a triblock copolymer wherein the end blocks are derived from styrene and the midblock is derived from at least one of isoprene and butadiene.

15. A composition according to claim 14 wherein the aliphatic unsaturation in the midblock has been removed by selective hydrogenation.

16. A composition according to claim 5 wherein there is also present (D) at least one compound containing a plurality of epoxide moieties, in the amount of about 0.1-3.0 parts per 100 parts of total components A, B and C.

17. A composition according to claim 16 wherein component D is triglycidyl isocyanurate.

18. A composition according to claim 17 wherein component C is a triblock copolymer wherein the end blocks are derived from styrene and the midblock is derived from at least one of isoprene and butadiene.

19. A composition according to claim 18 wherein the aliphatic unsaturation in the midblock has been removed by selective hydrogenation.